# EUROPEAN PATENT SPECIFICATION

(11) **EP 2 430 908 B1**
(45) Date of publication and mention of the grant of the patent: **25.12.2013**
(21) Application number: 10177220.0
(22) Date of filing: 16.09.2010
(51) Int. Cl.: A01G 9/02, G09F 3/12

(54) **Stake for a pot and assembly**
Stab für einen Topf und Kombination aus Topf und Stab
Tuteur pour pot et assemblage

(43) Date of publication of application: 21.03.2012
(73) Proprietor: Patentstar BV, 2771 NM Boskoop (NL)
(72) Inventor: Van der Starre, Bart, 2742 KV Waddinxveen (NL)
(74) Representative: De Vries & Metman

(56) References cited:
- FR-A1- 2 871 656
- NL-C1- 1 016 391
- NL-C1- 1 018 439
- US-A- 5 537 768

## Description

The present invention relates to a stake for a pot, in particular a plant pot, as well as an assembly of (plant) pot and stake.

It is known that plants are offered for sale in plant pots and with one or more objects in the form of information labels, portions of plant food etc. These objects are generally attached to the pot by means of one or more stakes or supports. A stake may optionally be provided with a carrying handle. Examples of such stakes may be found in NL 2000083 and NL 2000474.

To prevent undesired detachment, removal and/or exchange of the stakes and objects attached to them, e.g. during transport or in a shop display, these stakes are attached to the pot irremovable or hardly removable by means of a clip that is integrated in the stake.

A problem is that very many different types and models of plant pots from various suppliers are commercially available so that a corresponding diversity of stakes is required to obtain a fitting connection between a stake and a pot.

This problem has been recognised in US 5,537,768, which discloses a stake which is provided with a clip with two or more detents to attach the stake to pot rims of different sizes.

A stake according to US 5,537,768 has however the drawback that it is nevertheless only suitable for a limited number of types or models. Further, for a plastic embodiment a relatively expensive mould is required to allow defining the different required surfaces of the detents.

In addition, the stakes described above have the problem that a relatively adverse relationship between the shape of the pot rim and the detent requires a relatively large deformation of the clip, which may weaken it.

Thus, there exists a desire for an improved stake.

It is further noted that US 3,184,203 discloses a support for a flanged container. The support has three supports (14) which have a gripping assembly with a portion (32) inside the pot and a pivotal clamp (22) which grips around the flange of the pot. The pivotal clamp is connected to a chain (16) from which the pot can be suspended. Under influence of the weight of the pot the chain is tensioned and the gripping assembly is forced around the flange of the pot. A locking element is mounted upon the support which may be inserted into the chain to prevent accidental relaxation of the chain and disengagement of the gripping assembly.

The support of US 3,184,203 is readily detachable from the pot. Furthermore, the support consists of different materials so that its manufacture is relatively expensive.

In order to provide an improved stake, herewith is provided a stake for a pot, in particular a plant pot with a side wall which is provided at an upper side with a rim portion protruding from the side wall, e.g. a bent, flanged and/or bulging rim portion. The stake is provided with a connector for at least partly gripping around the rim portion. The connector comprises a first leg and a second leg which in use are connected with each other for forming the connector with a U- or C-shape with an aperture for gripping around the rim portion. The stake is provided with a latching arrangement for, in the connected state of the first and second legs, snapping the first and second legs into one or more relative positions opposite each other.

Such a stake may be snapped to the rim of the pot whereby the rim is clamped between the two legs. The relative positions of the first and second legs determine the size of the aperture of the connector and therewith the grip of the connector on (the rim portion of) the pot. Due to this, significant deformation of the connector upon attaching the stake of the connector is prevented, also in case of a relatively large or wide rim portion. By snapping the first and second legs, attachment of the connector is facilitated, but loosening and/or removing the connector, in particular without damage to at least a portion of the connector is rendered more difficult or prevented. This relates to both accidental forces or relaxation of (a portion of) the connector, and detachment and/or removal by directed action as well as combinations thereof.

The latching arrangement of an embodiment is arranged for allowing a change of the relative positions of the first and second legs by which the aperture of the connector is reduced and is also arranged for preventing a change of the relative positions of the first and second legs by which the aperture of the connector is increased.

Due to this the connector can be attached to the rim of the pot more tightly, but it is prevented that the connector, and thus the stake, becomes looser and/or gets removed. Such a stake can moreover be used with different types and shapes of pot rims since the aperture of the connector is adaptable to the different pot rims.

The latching arrangement may comprise one or more ratchet arrangements, wherein different ratchet positions correspond to different relative positions of the first and second legs. Thus, the legs may readily be set to different relative positions. A ratchet arrangement may be provided with an asymmetric toothing, e.g. with saw teeth with a relatively steep side and a relatively flat side. Also, barbed teeth are possible which may possibly be somewhat resilient to serve as latching pawls. The latching arrangement may also comprise one or more hooks and/or latch hooks for engaging the teeth of a rackbar, wherein a barbed tooth of latch hook may be flexible and/or biased. A suitable ratchet arrangement may be comparable to that of tie wraps, known per se. The ratchet positions, i.e. relative positions of the cooperating members of the ratchet arrangement, may be arranged at regular distances from each other or may be arranged in portions with different relative distances, e.g. a region with a coarse setting and a region with a fine setting. This may facilitate applying the stake. Ratchet positions may be chosen at manufacture to be in correspondence with different sorts of pot rims with which the stake should be useable.

In a preferred embodiment, the first and second leg extend substantially in a plane and the latching arrangement is provided with a ratchet arrangement with an engaging direction substantially perpendicular to the plane. This allows a relative displacement of the first and second leg in the plane, e.g. substantially in the longitudinal direction of the first or second leg, without compromising the operation of the ratchet arrangement (inasmuch as allowed by the dimensions of the ratchet arrangement). Further, tilting of the stake due to asymmetric gripping forces is prevented.

The first and second legs may be hingingly joined in use. This facilitates attaching the connector. Also, the connector need not be assembled during application of the stake. Further, the connector may be provided as an integral unit, wherein the hinge may be provided as a flexible portion.

The first and second leg may be connected in use with two or more hinges wherein adjacent hinges have a substantially constant separation and which advantageously hinge about substantially parallel hinging axes.

A plurality of hinges allows varying the size and shape of the connector aperture substantially independently, since the relative angle and distance of the first and second leg may be determined with different hinges. Thus, e.g. a triangular aperture may be realised. Substantially rigid connecting portions between the hinges allow defining relative positions of the hinges. Such portions may further serve to define the shape of the connector aperture.

One or more hinges may comprise one or more flexible portions of an otherwise rigid unit. Thus, the connector may be formed as an integral unit, e.g. by injection moulding of a plastic material in a mould.

The latching arrangement may comprise at least one rackbar, which may be curved, e.g. describe a curve about a hinging axis, e.g. a circle segment centred about a hinging axis between the first and second legs. Thus, a desired curved attachment direction and/or hinging motion may be followed and/or even be indicated, which improves reliably attaching and latching the stake on the pot rim.

In a preferred embodiment, the latching arrangement is provided with means for preventing detachment of the latching. E.g., the latching arrangement comprises a receptacle, in particular an aperture or a hole, in which or through which at least a portion of a rackbar protrudes in an engaging state of the connector on a pot rim. A receptacle in the form of a hole or an arrangement at least substantially fully gripping around the rackbar prevents detachment of the latching arrangement by a motion out of the plane of the engagement, e.g. prying and/or pulling loose the toothing and the latching portion. Also, a guide may be formed by the receptacle which facilitates application.

The stake may be provided with more than one latching arrangement for latching in more than one relative position of different portions that are connected in use, e.g. by means of a hinge. Thus, the shape of the aperture may be defined accurately.

The connector may be provided with one or more abutment surfaces which define at least part of the connector aperture and which may correspond with different pot rim shapes. This facilitates applying the stake and attaching the connector.

The second leg may be formed substantially hook-shaped, e.g. with a detent extending from the leg, for gripping the rim portion. In particular, a detent may be provided which in a connected situation of the first and second legs points from the second leg towards the first leg. The second leg may for instance be formed as a barb to facilitate engagement of the connector on a lower side of the rim portion.

Preferably, the first and second legs are substantially rigid, but may comprise some resiliency. Rigidity hinders and/or prevents loosening and/or detachment of the connector by bending open the legs. Resiliency may allow adaptation of the legs to the pot rim, e.g. during application of the stake, and it reduces chances of sudden breaking of a portion of the connector. A hard, but not brittle material, e.g. a metal or a hard, possibly thermoplastic, plastic material is preferred.

The stake may have a general pin-shape wherein the first leg may be provided with an extension arranged for being inserted into the interior of the pot. The relative positions of the stake and the pot may thus be reliably determined.

The extension may be bent in one or more directions, e.g. to allow close following of the side wall of one or more types of plant pots.

The extension may be provided with one or more surfaces or portions at different angles with respect to each other, such as e.g. a widened and/or enlarged pointed tip and/or a U-shaped or T-shaped profile in cross section perpendicular to the longitudinal direction of the extension. A pointed tip facilitates applying the stake and differently oriented surfaces provide increased anchoring of (the position and/or orientation of) the stake in a pot which is at least partly filled, e.g. with soil.

The first and/or second leg may be provided with one or more bevels or chamfers, to facilitate application of the stake over the pot rim.

The stake may be provided with a second connector for connection with a further object that is provided with a mated counterconnector to form a compound stake.

The second connector may be formed to allow coupling of the second connector and the mated counterconnector but to hinder or prevent their decoupling, e.g. by means of a latching and/or snap connection.

The, possibly compound, stake may be provided with a carrying arrangement for a label and/or a further object. The, possibly compound, stake may be provided with a handle and/or an ornament.

The stake may be sold per se or as an assembly with a plant pot, possibly in attached state and possibly complete with one or more plants.

The stake may for instance be manufactured by means of moulding techniques in one or more moulds. A suitable mould comprises to that end a cavity which comprises a first portion defining the shape of the upper portion, a second portion defining the shape of the lower portion and a third and a fourth portion defining the shapes of a connector and a latching arrangement, such that which is cast in (the cavity of) the mould and has substantially set forms a stake according to any one of the appended claims 1-13. A mould may be arranged for concurrently manufacturing more than one stake.

These and other aspects and benefits will be expounded and explained with reference to the drawings showing nonlimiting examples, and in which:
Fig. 1 shows a first embodiment of a stake with a connector in open state;
Figs. 2-4 show a detail of the stake of Fig. 1 (indicated with dashed lines II-IV in Fig. 1) which is attached to the rim of different plant pots (in cross section);
Fig. 5 shows an explosion view in perspective of a compound stake with a connector in open state;
Fig. 6 shows the stake of Fig. 5 in assembled and closed state;
Figs. 7-10 show a part of the stake of Fig. 5;
Fig. 11 illustrates a mould for forming the stake of Fig. 1;
Fig. 12 illustrates a mould for forming part of the stake of Fig. 5.

With regard to the figures it is noted that these are schematic, not necessarily to scale and parts that are not required for understanding the various aspects and benefits of the invention may have been left out.

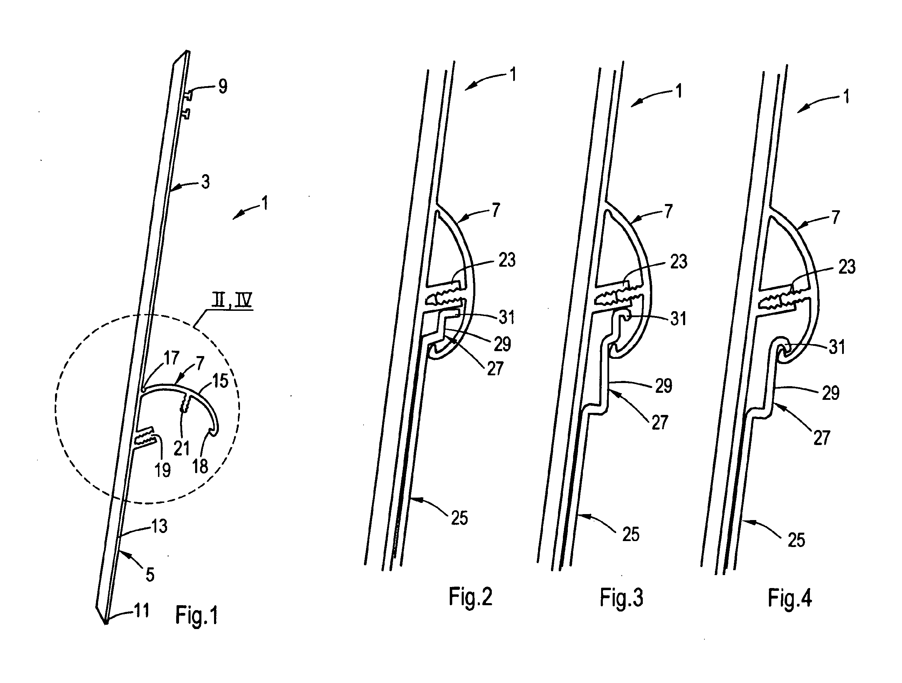

Figs. 1-4 show an improved stake 1. The stake comprises an upper portion 3, a lower portion 5 and a connector 7. The upper portion 3 comprises in the shown stake a connector 9 for a label and/or another object (not shown). The lower portion 5 is pin-shaped and is formed to be inserted into the interior of the plant pot. To that end, the lower portion 5 is provided with a pointed tip 11. The entire stake 1 has a substantially T-shaped cross section in a plane substantially perpendicular to the longitudinal axis of the stake 1.

The connector 7 comprises a first leg 13 and a second leg 15 which are connected to each other by means of a hinge 17, here a flexible portion of the otherwise substantially rigid stake 1. The pin-shaped lower portion 5 is in the shown stake integrated with and formed as an extension of the first leg 13. The second leg 15 is hook-shaped by virtue of it having been provided with a detent or toe 18 which extends from the second leg 15.

The first leg 13 and the second leg 15 are provided with first and second latching members 19 and 21 which cooperate to form a latching arrangement 23. The latching member 19 of the first leg 13 comprises a duo of oppositely arranged teeth, in the form of protrusions off the first leg 13 which each on their facing sides are provided with a toothing with saw teeth of which the short sides face the first leg, thus forming rackbars. The latching member 21 of the second leg 15 comprises a curved rackbar with toothings which fit the toothings of the first latching member 19 and which are provided on two opposite sides of a protrusion off the second leg 15. The first and second legs 13, 15 can be brought towards each other, by which the latching members 19, 21 engage each other, such that a U- or C-shape is formed around an aperture by the legs 13, 15 and the latching arrangement 23.

In the aperture a rim portion of a plant pot may be received and at least partially embraced and gripped by the legs 13, 15.

Figs. 2-4 show a detail of the stake of Fig. 1 with the connector 7 in snap-latched state. Figs. 2-4 each show a cross section of a portion of a plant pot with a side wall 25 which is provided at an upper side with a rim portion 27 protruding from the side wall 25. Figs. 2-4 illustrate different shapes of thinwalled plant pots that are commercially available. The rim portion 27 of Fig. 2 has an outwardly bent portion 29, and a sharply bent flange 31 at the upper side. The rim portion 27 of Fig. 3 has a stepped outwardly bent portion 29 and a curved flange 31. The rim portion 27 of Fig. 4 has high and wide outwardly bent rim 29 with a curved flange 31. Stone or clay plant pots usually have a bulging rim and/or a rim ornamented with a relief.

In Figs. 2-4 is visible that the rim portions 27 are engaged by and locked in between the first leg 13 and (the detent 18 of) the second leg 15, and in Figs. 2 and 3 also the latching arrangement 23. Due to the cooperating teeth of the latching arrangement 23 a ratchet arrangement is formed by which the legs 13, 15 may be pinched closer together and locked in that state by snapping. Thus, the legs 13, 15 may clamp (more) tightly the enclosed rim portion 27, but at the same time increasing the aperture between the legs 13, 15 is prevented. The connector 7 and thus the stake 1 therefore cannot be detached from the pot without effort and/or damage. The dimensions of the latching arrangement 23, in particular the lengths of the latching members 19, 21 and therefore their overlap in engaged state, determine a size range that may be gripped by the connector 7. The latching members 19, 21 here comprise curved rackbars, which are substantially circular and centred about a hinging axis that is defined by the hinge 17, so that it is prevented that the latching members 19, 21 only engage each other over a small portion and/or force each other loose elsewhere.

As shown in Fig. 4 it may happen that the shape of the rim portion 27 and the size of the connector 7 have such a relation that the connector can only grip around only a small flange 31, but not a relatively large collar 29 of the rim portion 27, when the collar 29 is higher than the length of the second leg (here: between the detent 18 and the underside of the latching arrangement 23). Thus, the pot and the stake cannot be detached without effort and/or damage, however play and freedom of movement may occur.

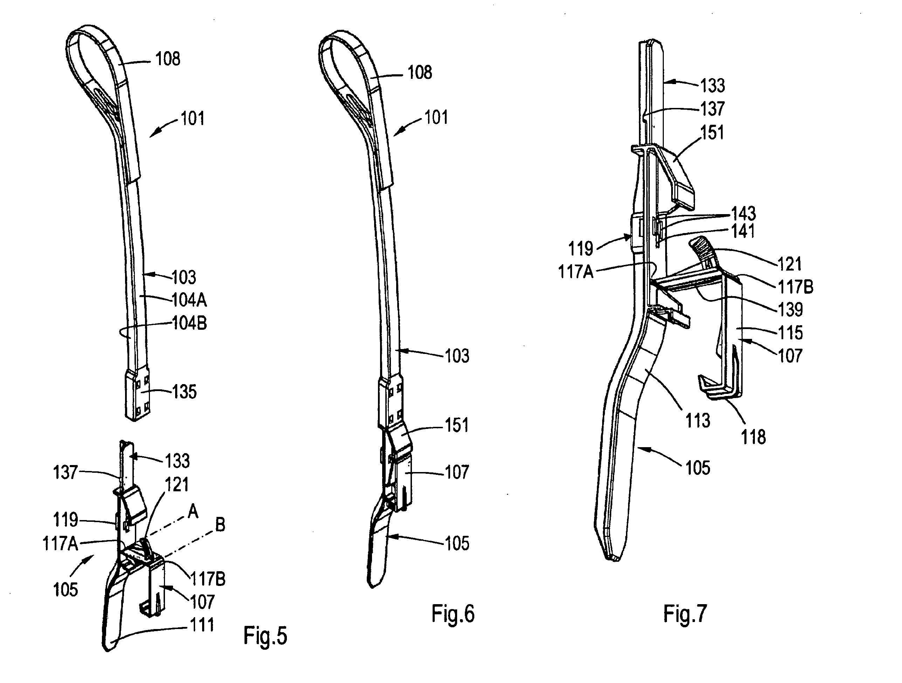

A further improved embodiment is shown in Figs. 5-6 with details in Figs. 7-10. In these figures, features which are substantially similar to and/or perform substantially similar function as features discussed before are identified with the same numeral, increased by 100.

Figs. 5-6 show a stake 101. The stake comprises an upper portion 103 and a lower portion 105. The lower portion 105 is shown in different views and forms in Figs. 7-10 and it comprises a connector 107.

The upper portion 103 comprises in the shown version a handle grip 108, which may have various shapes, and it may be provided with a connector and/or another object (not shown). The upper portion 103 has, in between the handle 108 and the lower portion 105 a substantially U-shape in cross section in a plane substantially perpendicular to the longitudinal direction of the stake 101, so that a front wall 104A and two side walls 104B of the upper portion 103 are formed. This provides strength to the stake 101 and provides a robust, rich appearance. The lower portion 105 is generally pin-shaped and is formed to be inserted into the interior of the plant pot. The lower portion 105 is to that end provided with a pointed tip 111. The lower portion 105 is somewhat curved to follow the shape of a side wall of a plant pot (different from Figs. 3 and 4). The lower portion 105 has a substantial T-shaped cross section in a plane substantially perpendicular to the longitudinal direction of the stake 101.

Different from the stake 1 of Figs 1-4, the stake 101 is a two-part compound object: the lower portion 105 comprises a second connector 133 and the upper portion 103 comprises a mated counterconnector 135. The shown connectors 133, 135 are formed to realise a snap-connection by means of cooperating locking projections 137 (only shown on lower portion 105). Thus, detachment of a once assembled stake 101 is substantially prevented. In stead of upper portion 103 also different upper portions may be arranged on the lower portion 105, if provided with a mated counterconnector 135 (not shown).

The connector 107 comprises a first leg 113 and a second leg 115 which are connected to each other by means of a first hinge 117A and a second hinge 117B, between which a relatively rigid connection member 139 is provided, so that the hinges 117A and 117B have a substantially constant separation. The hinges 117A and 117B are formed as a flexible portion of the otherwise substantially rigid stake 101 and define hinging axes A, B which extend substantially parallel each other. In the shown stake 101 the first leg 113 is integrated in the pin-shaped portion of the lower portion 105. The second leg 115 is in the shown embodiment hook-shaped with the leg 115 being provided with a bent detent 118.

The connector 107 is provided with a first latching member 119 and a second latching member 121 which cooperate to form a latching arrangement 123. The first latching member 119 is arranged on the lower portion 105 above the first hinge 117A and comprises a channel 141 through the lower portion 105 with side walls provided with two flexible side wall portions 143 which each are provided on their facing walls with one or more, possibly asymmetric, teeth or ribs.

The second latching member 121 is arranged in the connection member 139 and comprises two opposing toothings which are provided on opposite sides of a rackbar which protrudes from the connection member 139. The first and second latching members 119, 121, are formed to fit together, wherein (ribs of) the first latching member 119 and (teeth of) the second latching member engage each other.

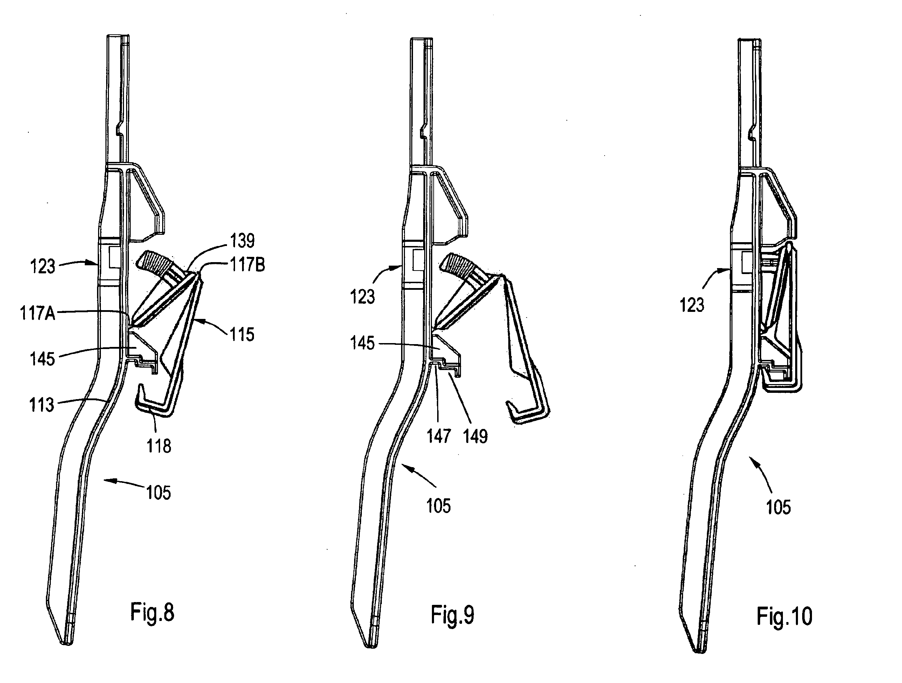

Further, the connector 107 comprises a protrusion 145 off the first leg 113, defining two abutment surfaces 147, 149 and a skirt 151 which forms a protection for the connector 107 in closed (snap-fixed) state (Figs. 6 and 10) and which provides the connector with a rounded-off appearance.

To attach the stake 101 to a pot rim, preferably (the tip 111 of) the lower portion 105 is inserted into the pot and is arranged along and against the interior side of the rim portion of the pot, so that an abutment surface 147, 149 abuts the pot rim. Due to the somewhat curved shape of the pin of the stake 101 and the bevelled and rounded shape of the underside of the second leg 115, insertion of the stake 101 and receiving the rim portion of the pot into the aperture of the connector is facilitated. Then, (the hook portion 118 of) the second leg 115 is arranged to at least partly grip around an exterior side of the rim portion, wherein preferably the optional hook portion 118 is arranged under and/or in an overhanging upper rim 31, and the latching members 119 and 121 are brought into mutual engagement to snap the connector 107 around the rim portion. Figs. 6 and 10 show the lower portion 105 with the connector 107 in its tightest clamping state (without showing a rim portion).

Due to the two hinges 117A, 117B the separation between the first leg 113 and the end of the second leg 115, here the hook portion 118, may vary strongly at the same relative position of the first leg 113 and the connection member 139 (Figs 8, 9). Thus, the aperture of the connector 107 which is circumscribed by the first leg 113, the second leg 115 and the optional abutment surfaces 147, 149, at one ratchet position of the latching arrangement 123 may vary strongly so that the connector 107 may be snapped tightly and reliably to various shapes and models of pot rims.

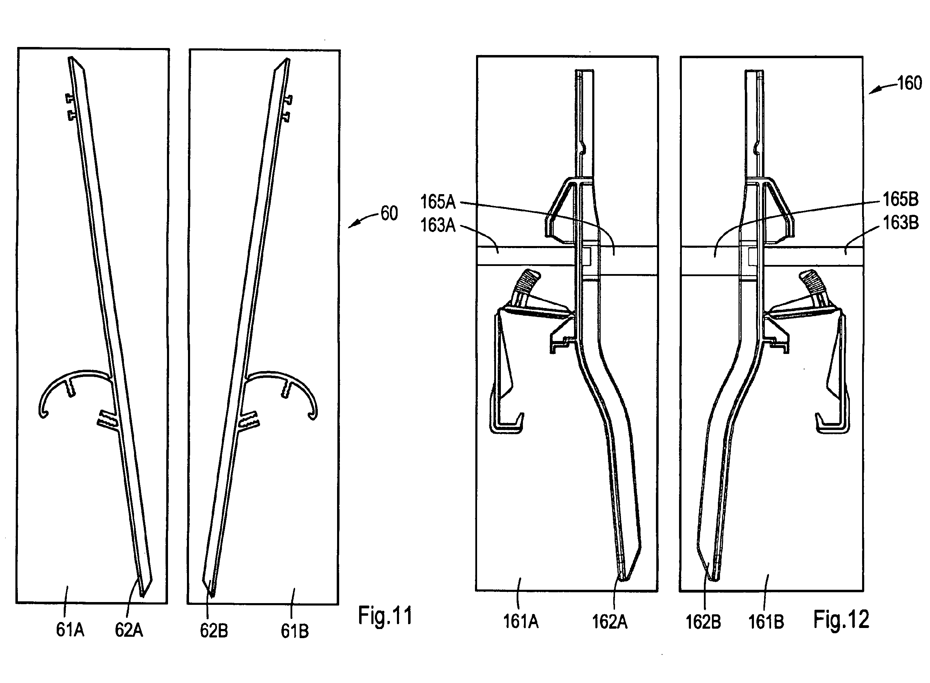

The stake 1 of Figs. 1-4 is unitary and is preferably formed by means of a moulding technique in a mould 60, which defines a cavity that forms the negative of the stake 1. The shown stake 1 is substantially symmetric in a plane parallel to that of Fig. 1. The mould 60 may therefore be separable in the symmetry plane of the stake 1, and it may comprise two substantially mirror symmetrical parts 61A, 61B with cavities 62A, 62B, as shown schematically in Fig. 11.

The lower portion 105 of Figs 5-10 is substantially symmetric in a plane parallel to that of Fig. 10 and it may be manufactured with a relatively simple mould 160 by means of a moulding technique. The mould 160 defines a cavity that forms the negative of the lower portion 105 of the stake 101. The mould 160 may be separable in the symmetry plane of the lower portion 105 and may comprise two substantially mirror symmetric parts 161A, 161B with cavities 162A, 162B, as shown schematically in Fig. 12. To form the channel 141 and the flexible side wall portions 143, insert members (not shown) for the mould may be used, which to that end may comprise receiving portions 163A, 163B, 165A, 165B.

Since the lower portion 105 and the upper portion 103 of the stake 101 are separate objects, they can be manufactured with different materials and with different techniques and/or moulds. The upper part 103 of Figs. 5-10 is also substantially symmetric in a plane substantially parallel to Fig. 10, but due to its U-shape, a mould for the upper portion 103 is preferably separable in a plane substantially parallel to the front wall 104A of the U-shape, and perpendicular to the separation plane of the mould for the lower portion.

The invention is of course not restricted to the embodiments described above which can be varied in different ways within the scope of the claims. E.g., portions and aspects of different embodiments may be combined.

The connector may be provided as a separate portion at some distance from a pin-shaped portion of the stake.

The first and/or second legs may be provided with means, e.g. teeth, roughened portions, adhesives and/or one or more portions with particular material properties such as (artificial) rubber or silicones for increasing grip or holding force on the pot rim.

In particular as a variant of the stake of Figs 5-10, the second leg may be formed flexible like a band or a flexible element with one or more hinging segments, so that for instance strongly profiled, curved or bulbous pot rims may be enclosed substantially closely. This facilitates prevention of snagging of objects behind the connector and/or damage of the connector.

Together with a compound stake, different upper portions may be provided, of which one or more may be separable from the lower portion, so that an upper portion that is arranged for (intermediate-)sale, e.g. with pricing information etc, may be replaced by a new upper portion with e.g. a gift holder and/or an ornamental head.

## Claims

1. Stake (1, 101) for a pot, in particular a plant pot with a side wall (25) which is provided at an upper side with a rim portion (27) protruding from the side wall, wherein the stake is provided with a connector (7, 107) for at least partially gripping around the rim portion;
wherein the connector comprises a first leg (13, 113) and a second leg (15, 115) which in use are connected for forming the connector with a U- or C-shape with an aperture for gripping the rim portion; **characterized in that**
the stake is provided with a latching arrangement (23, 123) for, in connected state of the first and second legs, snapping the first and second legs opposite each other into one or more relative positions.

2. Stake (1, 101) of claim 1, wherein the latching arrangement (23, 123) is arranged for allowing a change of the relative positions of the first leg (13, 113) and the second leg (15, 115) by which the aperture of the connector (7, 107) is reduced and also is arranged for preventing a change of the relative positions of the first and second legs by which the aperture of the connector (7, 107) is increased.

3. Stake (1, 101) of any preceding claim, wherein the latching arrangement (23, 123) comprises one or more ratchet arrangements, wherein different ratchet positions correspond to different relative positions of the first and second legs (13, 113; 15, 115).

4. Stake (1, 101) of claim 3, wherein the first leg (13, 113) and the second leg (15, 115) extend substantially in a plane and the latching arrangement is provided with a ratchet arrangement with an engaging direction that is substantially perpendicular to the plane.

5. Stake (1, 101) of any preceding claim, wherein the first leg (13, 113) and the second leg (15, 115) in use are hingingly joined.

6. Stake (101) of any preceding claim, wherein the first leg (113) and the second leg (115) in use are connected with two or more hinges (117A, 117B) wherein adjacent hinges have a substantially constant separation.

7. Stake (101) of claim 6, wherein at least two of the hinges (117A, 117B) comprise substantially parallel hinging axes.

8. Stake (1, 101) of any preceding claim, wherein the latching arrangement comprises at least one rackbar.

9. Stake (1, 101) of any preceding claim, wherein the connector (7, 107) is provided with one or more abutment surfaces (147, 149) which define at least a portion of the aperture of the connector.

10. Stake (1, 101) of any preceding claim, wherein the second leg (15, 115) is substantially hook-shaped for gripping at least part of the rim portion.

11. Stake (1, 101) of any preceding claim, wherein the stake has a general pin-shape and wherein the first leg (13, 113) is provided with an extension for insertion into the interior of the pot.

12. Stake (1, 101) of any preceding claim, provided with a second connector (133) for connection with a further object (103) that is provided with a mated counterconnector (135).

13. Stake (1, 101) of claim 12, wherein the second connector (133) is formed to allow coupling of the second connector and the mated counterconnector (135) but to hinder or prevent their decoupling.

14. Assembly of plant pot and stake (1, 101) of any preceding claim.

15. Mould (60, 160) for one or more stakes (1, 101) of any one of claims 1-13, comprising a cavity (62A, 62B, 162A, 162B) which comprises a first portion defining the shape of an upper portion (3, 103), a second portion defining the shape of the lower portion (5, 105) and a third and a fourth portion defining the shapes of a connector (7, 107) and a latching arrangement (23, 123), such that moulding material which is cast in the cavity of the mould and has substantially set forms a stake (1, 101) according to any one of the claims 1-13.

## Patentansprüche

1. Stange (1,101) für einen Topf, insbesondere einen Pflanzentopf mit einer Seitenwand (25), welche an einer oberen Seite mit einem Randabschnitt (27) versehen ist, der von der Seitenwand aus vorsteht, wobei die Stange mit einem Verbinder (7, 107) zum wenigstens teilweisen Umgreifen des Randabschnitts bereitgestellt ist,
wobei der Verbinder einen ersten Schenkel (13, 113) und einen zweiten Schenkel (15, 115) aufweist, welche im Gebrauch verbunden sind zum Ausbilden des Verbinders in einer U- oder C-Form mit einer Öffnung zum Greifen des Randabschnitts, **dadurch gekennzeichnet, dass**
die Stange bereitgestellt ist mit einer Arretiereinrichtung (23 ,123) zum Einrasten des ersten und des zweiten Schenkels gegenüber einander in einer oder mehr Relativpositionen im Verbunden-Zustand des ersten und des zweiten Schenkels.

2. Stange (1, 101) gemäß Anspruch 1, wobei die Arretiereinrichtung (23, 123) eingerichtet ist, um eine Änderung der Relativpositionen des ersten Schenkels (13, 113) und des zweiten Schenkels (15, 115), durch welche die Öffnung des Verbinders (7 ,107) verkleinert wird, zu erlauben, und außerdem eingerichtet ist, um eine Änderung der Relativpositionen des ersten Schenkels (13, 113) und des zweiten Schenkels (15, 115), durch welche die Öffnung des Verbinders (7,107) vergrößert wird, zu verhindern.

3. Stange (1, 101) gemäß irgendeinem vorhergehenden Anspruch, wobei die Arretiereinrichtung (23, 123) eine oder mehr Rasteinrichtungen aufweist, wobei unterschiedliche Rasteinrichtungen zu unterschiedlichen Relativposition des ersten und des zweiten Schenkels (13, 113; 15, 115) korrespondieren.

4. Stange (1, 101) gemäß Anspruch 3, wobei sich der erste Schenkel (13, 113) und der zweite Schenkel (15, 115) im Wesentlichen in einer Ebene erstrecken und die Arretiereinrichtung mit einer Rasteinrichtung mit einer Eingreif-Richtung, welche im Wesentlichen senkrecht zu der Ebene ist, bereitgestellt ist.

5. Stange (1, 101) gemäß irgendeinem vorhergehenden Anspruch, wobei der erste Schenkel (13, 113) und der zweite Schenkel (15, 115) im Gebrauch gelenkig verbunden sind.

6. Stange (101) gemäß irgendeinem vorhergehenden Anspruch, wobei der erste Schenkel ( 113) und der zweite Schenkel (115) im Gebrauch mittels zwei oder mehr Gelenken (117A, 117B) verbunden sind, wobei benachbarte Gelenke einen im Wesentlichen konstanten Abstand haben.

7. Stange (101) gemäß Anspruch 6, wobei wenigstens zwei von den Gelenken (117A, 117B) im Wesentlichen parallele Gelenkachsen aufweisen.

8. Stange (1, 101) gemäß irgendeinem vorhergehenden Anspruch, wobei die Arretiervorrichtung wenigstens eine Zahnstange aufweist.

9. Stange (1, 101) gemäß irgendeinem vorhergehenden Anspruch, wobei der Verbinder (7, 107) mit einer oder mehr Anlageflächen (147, 149) bereitgestellt ist, welche wenigstens einen Abschnitt der Öffnung des Verbinders definieren.

10. Stange (1, 101) gemäß irgendeinem vorhergehenden Anspruch, wobei der zweite Schenkel (15, 115) im Wesentlichen hakenförmig ist zum Greifen von wenigstens einem Teil des Randabschnitts.

11. Stange (1, 101) gemäß irgendeinem vorhergehenden Anspruch, wobei die Stange im Allgemeinen eine Stiftform hat und wobei der erste Schenkel (13, 113) mit einer Verlängerung zum Einsetzen in das Innere des Topfes bereitgestellt ist.

12. Stange (1, 101) gemäß irgendeinem vorhergehenden Anspruch, welche mit einem zweiten Verbinder (133) bereitgestellt ist zum Verbinden mit einem weiteren Objekt (103), welches mit einem zusammenpassenden Gegenverbinder (135) bereitgestellt ist.

13. Stange (1, 101) gemäß Anspruch 12, wobei der zweite Verbinder (133) ausgebildet ist, um das Kuppeln des zweiten Verbinders und des zusammenpassenden Gegenverbinders (135) zu erlauben, jedoch deren Entkuppeln zu erschweren oder zu verhindern.

14. Einrichtung aus Pflanzentopf und Stange (1, 101) gemäß irgendeinem vorhergehenden Anspruch.

15. Gussform (60, 160) für eine oder mehrere Stangen (1, 101) gemäß irgendeinem der Ansprüche 1-13, welche eine Kavität (62A, 62B, 162A, 162B) aufweist, welche einen ersten Abschnitt, der die Form eines oberen Abschnitts (3, 103) definiert, einen zweiten Abschnitt, der die Form des unteren Abschnitts (5, 105) definiert, und einen dritten und einen vierten Abschnitt, welche die Formen eines Verbinders (7, 107) und einer Arretiereinrichtung (23, 123) definieren, aufweist, so dass Formwerkstoff, welcher in die Kavität der Gussform gegossen wird und sich im Wesentlichen gesetzt hat, eine Stange (1, 101) gemäß irgendeinem der Ansprüche 1-13 ausbildet.

## Revendications

1. Tuteur (1, 101) pour un pot, en particulier un pot de plante avec une paroi latérale (25) qui est prévue sur un côté supérieur avec une partie de rebord (27) faisant saillie de la paroi latérale, dans lequel le tuteur est doté d'un connecteur (7, 107) pour saisir au moins en partie la partie de rebord ;
dans lequel le connecteur comprend une première branche (13, 113) et une deuxième branche (15, 115) qui sont reliées en utilisation pour former le connecteur en U ou C avec une ouverture pour saisir la partie de rebord ; **caractérisé en ce que** le tuteur est doté d'un dispositif de verrouillage (23, 123) pour, à l'état relié des première et deuxième branches, encliqueter les première et deuxième branches en regard l'une de l'autre dans une ou plusieurs positions relatives.

2. Tuteur (1, 101) selon la revendication 1, dans lequel le dispositif de verrouillage (23, 123) est disposé pour permettre un changement des positions relatives de la première branche (13, 113) et la deuxième branche (15, 115), par lequel l'ouverture du connecteur (7, 107) est réduite, et est aussi disposé pour éviter un changement des positions relatives des première et deuxième branches, par lequel l'ouverture du connecteur (7, 107) est augmentée.

3. Tuteur (1, 101) selon une quelconque revendication précédente, dans lequel le dispositif de verrouillage (23, 123) comprend un ou plusieurs ensembles à cliquet, dans lequel les différentes positions de cliquet correspondent à différentes positions relatives des première et deuxième branches (13, 113 ; 15, 115).

4. Tuteur (1, 101) selon la revendication 3, dans lequel la première branche (13, 113) et la deuxième branche (15, 115) s'étendent sensiblement dans un plan et le dispositif de verrouillage est doté d'un ensemble à cliquet avec une direction d'engagement qui est sensiblement perpendiculaire au plan.

5. Tuteur (1, 101) selon une quelconque revendication précédente, dans lequel la première branche (13, 113) et la deuxième branche (15, 115) sont jointes par articulation en utilisation.

6. Tuteur (1, 101) selon une quelconque revendication précédente, dans lequel la première branche (113) et la deuxième branche (115) sont reliées en utilisation à deux ou plus articulations (117A, 117B), dans lequel des articulations adjacentes présentent une séparation sensiblement constante.

7. Tuteur (1, 101) selon la revendication 6, dans lequel au moins deux des articulations (117A, 117B) comprennent des axes d'articulation sensiblement parallèles.

8. Tuteur (1, 101) selon une quelconque revendication précédente, dans lequel le dispositif de verrouillage comprend au moins une crémaillère.

9. Tuteur (1, 101) selon une quelconque revendication précédente, dans lequel le connecteur (7, 107) est doté d'une ou de plusieurs surfaces de butée (147, 149) qui définissent au moins une partie de l'ouverture du connecteur.

10. Tuteur (1, 101) selon une quelconque revendication précédente, dans lequel la deuxième branche (15, 115) est sensiblement en forme de crochet pour saisir au moins une partie de la partie de rebord.

11. Tuteur (1, 101) selon une quelconque revendication précédente, dans lequel le tuteur présente une forme générale de broche et dans lequel la première branche (13, 113) est dotée d'une extension pour l'insertion à l'intérieur du pot.

12. Tuteur (1, 101) selon une quelconque revendication précédente, doté d'un deuxième connecteur (133) pour la connexion avec un autre objet (103) qui est doté d'un connecteur antagoniste (135) apparié.

13. Tuteur (1, 101) selon la revendication 12, dans lequel le deuxième connecteur (133) est formé pour permettre le couplage du deuxième connecteur et du connecteur antagoniste apparié (135) mais pour empêcher ou éviter leur découplage.

14. Ensemble de pot de plante et de tuteur (1, 101) selon une quelconque revendication précédente.

15. Moule (60, 160) pour un ou plusieurs tuteurs (1, 101) selon l'une quelconque des revendications 1 à 13, comprenant une cavité (62A, 62B, 162A, 162B) qui comprend une première partie définissant la forme d'une partie supérieure (3, 103), une deuxième partie définissant la forme de la partie inférieure (5, 105) et une troisième et une quatrième parties définissant les formes d'un connecteur (7, 107) et un dispositif de verrouillage (23, 123) de sorte que le matériau de moulage, qui est coulé dans la cavité du moule et a sensiblement pris, forme un tuteur (1, 101) selon l'une quelconque des revendications 1 à 13.
